# EUROPEAN PATENT APPLICATION

(11) **EP 2 607 077 A1**
(43) Date of publication of application: **26.06.2013**
(21) Application number: 12008562.6
(22) Date of filing: 21.12.2012
(51) Int. Cl.: B32B 38/00, B32B 7/04, B32B 15/08, B32B 15/082, B32B 15/09, B32B 15/092, B32B 17/10, B32B 27/16, B32B 27/28, B32B 27/30, B32B 27/32, B32B 27/34, B32B 27/36, B32B 27/38, B32B 27/40

(54) **Composite and production method thereof**

(30) Priority: 22.12.2011 JP 2011281807
(71) Applicant: Shin-Etsu Chemical Co., Ltd., Chiyoda-ku, Tokyo (JP); Teijin Chemicals, Ltd., Chiyoda-ku Tokyo 100-0013 (JP)
(72) Inventor: Minemura, Masahiko, Annaka-shi, Gunma-ken (JP); Higuchi, Koichi, Annaka-shi, Gunma-ken (JP); Tanaka, Masaki, Tokyo (JP); Kotani, Takuji, Tokyo (JP); Tsunemore, Hideyuki, Tokyo (JP); Kumura, Taichi, Tokyo (JP)
(74) Representative: Wibbelmann, Jobst

(57) **Abstract**

There is disclosed a composite comprising a first substrate comprising a formed resin body containing a silicone-modified resin, and a second substrate having a to-be-joined surface joined to a to-be-joined surface of the first substrate,
wherein the to-be-joined surface of the first substrate, or the to-be-joined surfaces of the first and second substrates has/have been subjected to application of one or more of an ultraviolet light irradiating treatment, a corona treatment, and a plasma treatment.

As a result, there is provided a composite and an expedient production method of such a composite, which composite comprises a substrate comprising a formed resin body containing a silicone-modified resin, and another substrate joined to the firstly mentioned substrate in a strong manner with excellent durability therebetween.

## Description

### BACKGROUND OF THE INVENTION

### Field of the Invention

The present invention relates to a composite and a production method thereof, which composite comprises a substrate comprising a formed resin body containing a silicone-modified resin, and another substrate joined to the firstly mentioned substrate.

### Description of the Related Art

Although silicone-modified resins each combiningly possess properties of an organic resin and properties of a silicone and are thus used for various applications, such resins are each problematically insufficient in adhesiveness to another substrate.
Patent Document 1 has proposed a silicone rubber composite obtained by: forming an uncrosslinked silicone rubber layer between a first polyester film coated with a silicone-based primer and a second polyester film not coated with such a primer; and irradiating γ-rays to the thus formed laminate, thereby cross-linking the silicone rubber layer.

In this silicone rubber composite, the first polyester film coated with the primer is kept integrated with the silicone rubber layer, while leaving it to possible to peel the second polyester film not coated with the silicone-based primer from the silicone rubber layer. However, when the composite is subjected to a thermal stress or mechanical stress, the primer layer itself is caused to be peeled from a surface of the first film, thereby problematically resulting in that the silicone rubber layer is peeled from the first polyester film.

Patent Document 2 has proposed a joining method configured to previously apply a plasma treatment onto a substrate, to coat a liquid silicone coating having transmissivity to ultraviolet light onto the substrate, and to irradiate ultraviolet light to the substrate through the transmissible coating so as to further strengthen the adhesiveness. However, this method is problematic in that its steps are complicated, and that the coating to be coated onto the substrate is required to possess a transparency.

Although Patent Document 3 has proposed to join a first substrate made of polydimethylsiloxane to a second substrate made of glass or silicon, by utilizing ultraviolet light of 172nm, no descriptions are found therein about joining methods for substrates other than polydimethylsiloxane.
Further, examples other than the above Patent Documents include Patent Documents 4 to 9.
Although the latter Patent Documents have proposed improvement of adhesiveness of organic resins and/or silicones, respectively, no proposals are found therein about improvement of adhesiveness of a silicone-modified resin.

### CITATION LIST

### PATENT LITERATURE

Patent Document 1: JP9-314754A
Patent Document 2: JP2010-106080A
Patent Document 3: JP2007-130836A
Patent Document 4: JP5-106021A
Patent Document 5: JP9-48863A
Patent Document 6: JP2002-220479A
Patent Document 7: JP2003-225972A
Patent Document 8: JP2008-183868A
Patent Document 9: WO2007/119552A1

### SUMMARY OF THE INVENTION

Particularly, it has been conventionally difficult to join a substrate comprising a formed resin body containing a silicone-modified resin to another substrate, in a strong manner with excellent durability therebetween.

The present invention has been carried out to solve the above problem, and it is therefore an object of the present invention to provide a composite and an expedient production method of such a composite, which composite comprises a substrate comprising a formed resin body containing a silicone-modified resin, and another substrate joined to the firstly mentioned substrate in a strong manner with excellent durability therebetween.

To solve the above problem, the present invention provides a composite comprising a first substrate comprising a formed resin body containing a silicone-modified resin, and a second substrate having a to-be-joined surface joined to a to-be-joined surface of the first substrate,
wherein the to-be-joined surface of the first substrate, or the to-be-joined surfaces of the first and second substrates has/have been subjected to application of one or more of an ultraviolet light irradiating treatment, a corona treatment, and a plasma treatment.

In such a composite, the substrate comprising the formed resin body containing the silicone-modified resin is joined to the other substrate in a strong manner with excellent durability therebetween.

It is possible that the silicone-modified resin contained in the first substrate is provided by silicone-modifying one or more kinds of an epoxy resin, a polyethylene resin, a polypropylene resin, a polystyrene resin, an acrylic resin, a polycarbonate resin, a thermoplastic urethane resin, a PBT resin, a PET resin, a polyimide resin, and a polyamide imide resin. Further, it is possible that the second substrate is a formed resin body, a cured paint resin body, a glass, or a metal, and that the formed resin body or cured paint resin body as the second substrate comprises one or more kinds of a polyethylene resin, a polypropylene resin, a polystyrene resin, an acrylic resin, a polycarbonate resin, a thermoplastic urethane resin, a PBT resin, a PET resin, a polyimide resin, a polyamide imide resin, and a silicone-modified resin obtained by silicone-modifying one of these resins.

In such a composite of the present invention, the first substrate and second substrate are allowed to be joined to each other, in a strong manner with excellent durability therebetween.

It is also possible that the silicone-modified resin comprises a resin structure to be modified, and a silicone structure represented by the following average composition formula (i) and bonded to the resin structure in a blocked form or grafted form,

R¹ₐR¹_{b}SiO_{4-a-b/4} (i)

wherein
R¹ represents a hydrogen atom, or a monovalent hydrocarbon group,
R² represents one of a single bond and a divalent hydrocarbon linking group each to be bonded to the resin structure, which divalent hydrocarbon linking group may include a nitrogen atom, oxygen atom, or sulfur atom, and
"a" and "b" represent such numbers, respectively, satisfying that 0<a≤3, 0<b≤1, and 0<a+b<4.

Such a silicone-modified resin is capable of forming the composite comprising the first and second substrates bonded to each other in a stronger manner with more excellent durability.

It is preferable that the ultraviolet light irradiating treatment to be applied to the to-be-joined surface is conducted by irradiation of ultraviolet light at a wavelength of 172nm or 126nm. It is also preferable that the first substrate contains a silicone modification amount of 0.001 to 10 mass%.

In this way, it is enabled to form a composite comprising a substrate comprising a formed resin body containing a silicone-modified resin, and another substrate joined to the firstly mentioned substrate, in a stronger manner with more excellent durability therebetween.

Further, it is preferable that the composite of the present invention is used as a display medium, as an alternative material to a vehicular glass, or as an alternative material to a constructional glass.

Namely, the composite of the present invention is usable for various applications, and exhibits a higher durability when the composite is used as a display medium, as an alternative material to a vehicular glass, or as an alternative material to a constructional glass.

Moreover, the present invention provides a method of joining a to-be-joined surface of a first substrate comprising a formed resin body containing a silicone-modified resin to a to-be-joined surface of a second substrate to thereby produce a composite, comprising:
a joining surface treating step for applying one or more of an ultraviolet light irradiating treatment, a corona treatment, and a plasma treatment, to the to-be-joined surface of the first substrate, or to the to-be-joined surfaces of the first and second substrates; and
a joining step for subsequently joining the first substrate to the second substrate.

According to such a method, it is enabled to readily produce a composite by joining a substrate comprising a formed resin body containing a silicone-modified resin to another substrate, in a strong manner with excellent durability therebetween.

It is possible that the silicone-modified resin contained in the first substrate is provided by silicone-modifying one or more kinds of an epoxy resin, a polyethylene resin, a polypropylene resin, a polystyrene resin, an acrylic resin, a polycarbonate resin, a thermoplastic urethane resin, a PBT resin, a PET resin, a polyimide resin, and a polyamide imide resin. Further, it is possible that the second substrate is a formed resin body, a cured paint resin body, a glass, or a metal, and that the formed resin body or cured paint resin body as the second substrate comprises one or more kinds of a polyethylene resin, a polypropylene resin, a polystyrene resin, an acrylic resin, a polycarbonate resin, a thermoplastic urethane resin, a PBT resin, a PET resin, a polyimide resin, a polyamide imide resin, and a silicone-modified resin obtained by silicone-modifying one of these resins.

According to such a production method of a composite of the present invention, the first substrate and second substrate are allowed to be joined to each other, in a strong manner with excellent durability therebetween.

It is also possible that the silicone-modified resin comprises a resin structure to be modified, and a silicone structure represented by the following average composition formula (i) and bonded to the resin structure in a blocked form or grafted form:

R¹ₐR²_{b}SiO_{4-a-b/4} (i)

wherein
R¹ represents a hydrogen atom, or a monovalent hydrocarbon group,
R² represents one of a single bond and a divalent hydrocarbon linking group each to be bonded to the resin structure, which divalent hydrocarbon linking group may include a nitrogen atom, oxygen atom, or sulfur atom, and
"a" and "b" represent such numbers, respectively, satisfying that 0<a≤3, 0<b≤1, and 0<a+b<4.

Such a silicone-modified resin is capable of forming the composite comprising the first and second substrates bonded to each other in a stronger manner with more excellent durability.

It is preferable that the ultraviolet light irradiating treatment to be applied to the to-be-joined surface is conducted by irradiation of ultraviolet light, and particularly by irradiation of ultraviolet light at a wavelength of 172nm or 126nm. It is also preferable to irradiate ultraviolet light at a wavelength of 172nm to the to-be-joined surface of the first substrate as the ultraviolet light irradiating treatment, to closely contact the second substrate with the thus treated surface, and to heat the substrates to a temperature between 40°C and 200°C to thereby join them to each other.

In this way, it is enabled to form the composite comprising the first and second substrates bonded to each other in a stronger manner with more excellent durability.

As explained above, the composite of the present invention is realized in such a manner that the first substrate comprising the formed resin body (such as a formed resin body, resin film, cured paint resin body, or the like) containing the silicone-modified resin is joined to the second substrate such as another formed resin body, resin film, cured paint resin body, glass, metal, or the like, in a strong manner with excellent durability therebetween. Further, it is allowed by the present invention to provide a more expedient production method of such a composite.

### DETAILED DESCRIPTION OF THE PREFERRED EMBODIMENTS

Although the composite and production method thereof of the present invention will be described hereinafter in detail, the present invention is not limited thereto. As mentioned above, there has been desired a composite comprising a substrate and another substrate joined to each other in a strong manner with excellent durability therebetween.

The present inventors have earnestly and repetitively conducted investigations so as to achieve the above object, and have found that it is possible to obtain a composite comprising a first substrate comprising a formed resin body (such as a resin film, cured paint resin body, or the like) containing a silicone-modified resin, and a second substrate (such as a formed resin body, resin film, cured paint resin body, glass, metal, or the like) joined to the first substrate in a strong manner with excellent durability therebetween, by applying one or more of an ultraviolet light irradiating treatment, a corona treatment, and a plasma treatment to a to-be-joined surface of the first substrate, and by placing the first substrate on the second substrate to directly and closely contact them with each other, thereby narrowly completing the present invention. The present invention will be explained hereinafter in detail.

The present invention resides in a composite comprising a first substrate comprising a formed resin body containing a silicone-modified resin, and a second substrate having a to-be-joined surface joined to a to-be-joined surface of the first substrate, wherein the to-be-joined surface of the first substrate, or the to-be-joined surfaces of the first and second substrates has/have been subjected to application of one or more of an ultraviolet light irradiating treatment, a corona treatment, and a plasma treatment.

Here, the first substrate is not particularly limited insofar as the same is a formed body of a resin containing a silicone-modified resin, and is to mean a formed body of silicone-modified resin, a silicone-modified resin film, a cured body of silicone-modified paint resin, and the like as well as a formed resin body, a resin film, a cured paint resin body, and the like each containing a silicone-modified resin. In turn, the second substrate is to be joined to the first substrate without particular limitation, and is to mean a formed body of silicone-modified resin, a silicone-modified resin film, a cured body of silicone-modified paint resin, and the like, a formed resin body, a resin film, a cured paint resin body, and the like each containing a silicone-modified resin, as well as a formed resin body, a resin film, a cured paint resin body, each containing no silicones, a glass, a metal, and the like.

Those resins (hereinafter each also called "resin structure") usable for the first substrate and to be silicone-modified, and those resins usable for the second substrate may each be a natural resin or synthetic resin. However, synthetic resins are preferable. Examples of such synthetic resins include: thermosetting resins such as a phenol resin, an epoxy resin, a melamine resin, a urea resin, an unsaturated polyester resin, an alkyd resin, a thermosetting urethane resin, and a thermosetting polyimide resin; and thermoplastic resins such as a polyethylene resin, a polypropylene resin, a polyvinyl chloride resin, a polystyrene resin, a polyvinyl acetate resin, a fluorine-based resin, an ABS (acrylonitrile-butadiene-styrene) resin, an AS (acrylonitrile-styrene) resin, an acrylic resin, a polyamide resin, a polyacetal resin, a polycarbonate resin, a thermoplastic urethane resin, a modified polyphenylene ether resin, a PBT (polybutylene terephthalate) resin, a PET (polyethylene terephthalate) resin, a cyclic polyolefin-based resin, a polyphenylene sulfide resin, a polysulfone resin, a polyethersulfone resin, a liquid crystal polymer, a polyether ether ketone resin, a polyimide resin, and a polyamide imide resin.

Preferable as the resin structure to be used in the first substrate is: an epoxy resin as a thermosetting resin; a thermoplastic resin; or the like. Particularly preferable as the silicone-modified resin to be contained in the first substrate is one obtained by silicone-modifying one or more kinds of an epoxy resin, a polyethylene resin, a polypropylene resin, a polystyrene resin, an acrylic resin, a polycarbonate resin, a thermoplastic urethane resin, a PBT resin, a PET resin, a polyimide resin, and a polyamide imide resin.

It is noted that the first substrate is not particularly limited insofar as the same contains a silicone-modified resin, and is allowed to contain another resin and another component, in addition to the silicone-modified resin. For example, the first substrate may be a blend of a silicone-modified resin and that one of the above mentioned synthetic resins which is not silicone-modified, or may be a composite material obtained by blending glass fibers or carbon fibers into a resin composition containing a silicone-modified resin.

Here, the term "formed body" implies what is formed into an arbitrary shape, and embraces a film, a cured body in an arbitrary shape, and the like. Further, the "formed body" is not particularly limited in itself, in shape, surface state, hardness, and transparency.

Further, it is possible that the second substrate is a formed resin body, a cured paint resin body, a glass, or a metal, and it is more preferable that the second substrate is a glass or a formed resin body comprising a thermosetting resin. Here, it is possible that the formed resin body or cured paint resin body comprises one or more kinds of a polyethylene resin, a polypropylene resin, a polystyrene resin, an acrylic resin, a polycarbonate resin, a thermoplastic urethane resin, a PBT resin, a PET resin, a polyimide resin, a polyamide imide resin, and a silicone-modified resin obtained by silicone-modifying one of these resins.

Furthermore, it is possible that the silicone-modified resin allowed to be contained in the first substrate and/or the silicone-modified resin to be contained in the second substrate comprises the applicable resin structure to be modified, and a silicone structure represented by the following average composition formula (i) and bonded to the resin structure in a blocked form or grafted form:

R¹ₐR²_{b}SiO_{4-a-b/4} (i)

wherein
R¹ represents a hydrogen atom, or a monovalent hydrocarbon group,
R² represents one of a single bond and a divalent hydrocarbon linking group each to be bonded to the resin structure, which divalent hydrocarbon linking group may include a nitrogen atom, oxygen atom, or sulfur atom, and
"a" and "b" represent such numbers, respectively, satisfying that 0<a≤3, 0<b≤1, and 0<a+b<4.

In the average composition formula (i), R¹ represents each independently a hydrogen atom, or a monovalent hydrocarbon group. Examples of the monovalent hydrocarbon group include: alkyl groups such as a methyl group, an ethyl group, and a propyl group; aromatic groups such as a phenyl group, and a phenylethyl group; halogen-containing groups such as a trifluoropropyl group, a chloropropyl group, and a chlorophenyl group; an amino-containing group; an epoxy group; a cyano group; an ester bond-containing group; and the like, without limited thereto. Preferably, the monovalent hydrocarbon group is an alkyl group, or an aromatic group, and preferably a methyl group or a phenyl group.

R² is not particularly limited insofar as the same participates in the bond to the resin, and represents one of a single bond and a divalent hydrocarbon linking group each to be bonded to the resin structure, which divalent hydrocarbon linking group may include a nitrogen atom, oxygen atom, or sulfur atom. Examples of the divalent hydrocarbon linking group include: bonds containing an alkylene group such as a methylene group, ethylene group, or propylene group, or a phenylene group; an ester bond; an ether bond; an amide bond; a urethane bond; a urea bond; and the like; such that the preferable kind of the bond depends on the applicable resin.

The number "a" in the average composition formula (i) is to satisfy that 0<a≤3, preferably 0.5≤a≤2.5, and more preferably 0.7≤a≤2.1. The number "b" in the average composition formula (i) is to satisfy that 0<b≤1, preferably 0.01≤b≤0.8, and more preferably 0.02≤b≤0.4.

The silicone-modified resin to be contained in the first substrate and the silicone-modified resin allowed to be contained in the second substrate can each be obtained by reacting a silicone having a functional group with a resin to be silicone-modified, by means of heat or light, thereby introducing the silicone into the resin structure.

For example, the silicone-modified thermosetting urethane resin and silicone-modified thermoplastic urethane resin are each obtainable by reacting a silicone having an alcoholic hydroxyl group with a diisocyanate compound and a polyol compound.

Also, the silicone-modified (meth)acrylic resin is obtainable, by adopting: a siloxane having a methacryl group; a typical (meth)acrylic compound such as acrylic acid, methacrylic acid, methyl methacrylate, hydroxymethacrylate, or the like; and a radical initiator; in a manner to conduct a bulk polymerization/solution polymerization/emulsion polymerization, as well as photo-curing.

The silicone-modified polycarbonate is obtainable by reacting a siloxane having phenolic hydroxyl groups at its both ends, respectively, in a state coexistent with a dihydric phenol or aliphatic diol, with a carbonate precursor.

The silicone-modified polyolefin is obtainable by bonding: a hydrogen siloxane having an Si-H group; to a nonconjugated polyene random copolymer synthesized by adopting an end vinyl group-containing norbornene; by means of hydrosilylation.

The silicone-modified polyimide is obtainable by subjecting an acid dianhydride and a both-end-amino siloxane, to a dehydrating ring closure reaction.

It is preferable that the first substrate contains a silicone modification amount of 0.001 to 10 mass%. Particularly, when the first substrate comprises a silicone-modified resin only, it is possible that the silicone modification amount to be contained in the first substrate, i.e., the silicone modification amount bonded to the resin, is made to be 0.001 to 70 mass%, preferably 0.001 to 10 mass%, and more preferably 0.01 to 5 mass%. Here, the "silicone modification amount" implies an amount of silicone structure bonded to the resin structure.

Further, when the first substrate contains a silicone-modified resin and is a formed resin body mixed with another resin, the silicone modification amount to be contained in the first substrate is preferably 0.001 to 20 mass%, more preferably 0.001 to 10 mass%, and most preferably 0.01 to 5 mass%, relative to the total amount of the formed resin body.

Examples of such a first substrate include silicone-modified urethanes (X-22-2756, X-22-2760) produced by Shin-Etsu Chemical Co., Ltd., a silicone-modified acrylic resin (KP545) produced by Shin-Etsu Chemical Co., Ltd., a silicone-modified acrylic resin (Chaline 170S) produced by Nisshin Chemical Industry Co., Ltd., Lexan EXL produced by SABIC Innovative Plastics Japan, and Tarflon Neo produced by Idemitsu Kosan Co., Ltd.

The to-be-joined surface of the first substrate of the composite of the present invention or the to-be-joined surface of the second substrate thereof is to be subjected to application of one or more of an ultraviolet light irradiating treatment, a corona treatment, and a plasma treatment.

Preferable as an article adopting the composite of the present invention is a display medium, an alternative material to a vehicular glass, or an alternative material to a constructional glass, such that the composite of the present invention exhibits a higher durability even when used in such applications.

The method of the present invention for joining a to-be-joined surface of a first substrate comprising a formed resin body containing a silicone-modified resin to a to-be-joined surface of a second substrate to thereby produce a composite, comprises: a joining surface treating step for applying one or more of an ultraviolet light irradiating treatment, a corona treatment, and a plasma treatment, to the to-be-joined surface of the first substrate, or to the to-be-joined surfaces of the first and second substrates; and a joining step for subsequently joining the first substrate to the second substrate.

Usable as such a first substrate and a second substrate are those as described above. Also, usable as such a silicone-modified resin are those as described above.

In the joining surface treating step, the to-be-joined surface of the first substrate, or the to-be-joined surfaces of the first substrate and second substrate is/are subjected to application of one or more of an ultraviolet light irradiating treatment, a corona treatment, and a plasma treatment. Among these treatments, the ultraviolet light irradiating treatment is particularly preferable. Further, it is more preferable to apply the treatment to both the to-be-joined surfaces of the first substrate and second substrate, than to apply the treatment only to the to-be-joined surface of the first substrate.

The ultraviolet light irradiating treatment is not particularly limited, and it is preferable that the ultraviolet light irradiating treatment is conducted by irradiation of ultraviolet light at a wavelength of 172nm or 126nm, more preferably by irradiation of ultraviolet light at 172nm. Further, the ultraviolet light to be used for the ultraviolet light irradiating treatment is not particularly limited. Nonetheless, 172nm excimer VUV is preferable, and examples of a preferable apparatus therefor include SUS05, SUS06 manufactured by USHIO INC., E700-172 manufactured by Excimer Corporation, and the like.

The corona treatment may be an air corona treatment to be conducted in an atmosphere of air or a corona treatment to be conducted in an atmosphere of nitrogen gas, and examples of a preferable apparatus therefor include CTW series of Asakusa Machinery Co., Ltd., and TEC-4AX manufactured by KASUGA ELECTRIC WORKS LTD.

The plasma treatment is a technique for treating a resin surface by generating plasma in a high vacuum, and examples of an apparatus therefor include a plasma generating apparatus manufactured by Shinko Seiki Co., Ltd. It is noted that the above mentioned treatments may be conducted combinedly.

The joining surface treating step increases the number of hydroxyl groups at the applicable to-be-joined surface(s), so that the first substrate and the second substrate are directly joined to each other in the thus activated state of the to-be-joined surface(s), thereby enabling to join them in a strong manner with excellent durability therebetween.

Further, so as to improve the joinability, it is also possible to coat an adhesion adjuvant component such as a silane-based coupling agent, a titanium-based coupling agent, or the like, onto the to-be-joined surface of the first substrate and/or the to-be-joined surface of the second substrate before joining the substrates.

It is noted that, although the time from the joining surface treating step to the joining step is not particularly limited, such a time is to be preferably 24 hours or shorter, more preferably 1 hour or shorter, and most preferably 10 minutes or shorter. Shorter times lead to stronger and more durable joints. This is considered to be because the hydrophilic groups formed on the applicable to-be-joined surface by the treatment are gradually decreased in number as the time progresses.

It is noted that, when the treated first substrate and second substrate after the joining surface treating step are to be left to stand still until the joining step, it is preferable to place them in a humid atmosphere or to immerse them in water.

Although not particularly limited, it is desired that the first substrate and second substrate are contacted with each other in a state as close as possible without any gaps therebetween, in the joining step. Further, upon contact, it is more preferable to pressingly hold the first substrate and second substrate to each other, than to contact them based on a self-weight of one of them. Examples of such pressing means include a roll, a pressing machine, and the like. Moreover, although the temperature for joining is not particularly limited, it is preferable to heat to a temperature of 25°C or higher, more preferably between 40 and 200°C, and most preferably between 50 and 100°C, from a standpoint to shorten the joining time.

Furthermore, it is possible to determine the condition of the joining step, depending on the treatment condition of the joining surface treating step. For example, when the first substrate has been subjected to irradiation of ultraviolet light at a wavelength of 172nm as the ultraviolet light irradiating treatment, it is preferable that the second substrate is closely contacted with the thus treated to-be-joined surface, followed by heating to a temperature between 40 and 200°C.

### EXAMPLES

Although the present invention will be explained hereinafter in more detail by describing Examples and Comparative Examples, the present invention is not limited to these Examples and Comparative Examples. To be firstly enumerated are treatment conditions, resins, and evaluation manners of joinability, to be used in Examples and Comparative Examples.

### (1) Ultraviolet Light Irradiating Treatment Condition

Used was an SUS05 apparatus manufactured by USHIO INC., in a manner to treat a surface of a first substrate with an ultraviolet light irradiation intensity of 10mW/cm², an irradiation time of 10 seconds, and an integrated ultraviolet light quantity of 100mJ/cm².

### (2) Corona Treatment Condition

Used was a corona treatment apparatus (high frequency power supply: CT-0212 manufactured by KASUGA ELECTRIC WORKS LTD., main body of transmitter: CT-0212 manufactured by KASUGA ELECTRIC WORKS LTD., and high-voltage transformer: CT-T022 manufactured by KASUGA ELECTRIC WORKS LTD.), in a manner to conduct the treatment continuously three times, by adjusting the distance between the substrate surface and an electrode of the corona treatment apparatus to be 3mm, under a condition of an output of 280W, a line speed of 1.0m/min, an ambient temperature of 23°C, and an ambient relative humidity RH of 55%.

### (3) Plasma Treatment Condition

Used was a plasma generating apparatus manufactured by Shinko Seiki Co., Ltd., in a manner to conduct the treatment under reduced pressure of 4Pa, for 10 minutes, while flowing treatment gases, i.e., methane at 2ml/min and oxygen at 1ml/min.

### [Production Method of Joined Body]

Within five minutes after the above treatments were each conducted, the first substrate was pressurizedly contacted with the second substrate at a weight of 1kgf/10cm², followed by aging at 100°C for one hour.

### [Joined Degree Test]

Evaluation was conducted when the first substrate and the second substrate of the joined body were pulled apart from each other in both directions, such that the joined degree was evaluated to be "Good" where the substrates were not peeled from each other at the to-be-joined surfaces and one of them was broken, to be "Fair" where part of the to-be-joined surface(s) was peeled, and to be "Poor" where the substrates were peeled from each other at the to-be-joined surfaces.

### [SxTPU: Silicone-modified thermoplastic polyurethane resin]

Added into and reacted with: 1,000 mass parts of ester-modified polysiloxane-polyol having an averaged molecular weight of 5,200 and a siloxane component of 60 mass%, obtained by copolymerizing alcohol-modified siloxane oil (KF-6002: produced by Shin-Etsu Chemical Co., Ltd.) having an averaged molecular weight of 3,200, with ε-caprolactone; and 1,080 mass parts of polytetramethylene ether glycol having an averaged molecular weight of 1,700: were 324 mass parts of 1,4-butanediol and 1,160 mass parts of 4,4'-diphenyl methane diisocyanate, at 100°C, thereby obtaining a silicone-modified thermoplastic polyurethane resin (SxTPU). The thus obtained SxTPU had a siloxane modification amount of 17 mass%.

### [SxPC: Silicone-modified polycarbonate]

Charged into a reaction vessel with a thermometer, a stirrer, and a reflux condenser were 29,700 mass parts of 6 mass% sodium hydroxide water solution containing 7.6 mass parts of sodium dithionite, and 3,897 mass parts of bisphenol A was dissolved thereinto. Thereafter added into the solution was 11L of methylene chloride, into which 1,900 mass parts of phosgene was blown over 60 minutes at 22 to 30°C with stirring, followed by addition of 7,836 mass parts of 7 mass% sodium hydroxide water solution and 108 mass parts of p-tert-butyl phenol into the obtained polycarbonate oligomer solution. Added into the resultant solution with stirring was 210 parts by weight of both-end-phenolic group-containing siloxane (polymerization degree of 40) obtained by hydrosilylating a siloxane having Si-H groups at its both ends with eugenol, in a manner to achieve an emulsified state of the resultant mixed solution, followed by stirring again. Under such stirring, 6ml of triethylamine was added into the reactive solution in a state at 26°C, and then stirring was kept conducted at a temperature between 26 and 31°C for one hour, thereby terminating the reaction. After the termination of the reaction, the organic phase or methylene chloride solution was isolated from the resultant solution and washed by hydrochloric acid water and then by pure water. At the time where the phase of such washing water reached exhibition of an electrical conductivity equivalent to that of pure water, the methylene chloride solution was concentrated and crushed, followed by drying under reduced pressure, thereby obtaining a siloxane-polycarbonate copolymer (SxPC) having a siloxane modification amount of 5 mass%.

### [Sx Acrylic I: Silicone-modified acrylic resin]

Heated in a reaction vessel was 250ml of toluene to 80°C. Simultaneously dropped thereinto over 2 hours were: a mixture (total amount of 300g) of 50 mass% of one-end-methacrylsiloxane (X-22-176DX produced by Shin-Etsu Chemical Co., Ltd.), 36 mass% of methylmethacrylate, 7 mass% of butylmethacrylate, and 7 mass% of 2-ethylhexylacrylate; and a solution obtained by diluting 3g of benzoyl peroxide with 50ml of toluene. The resultant solution was further maturated for 5 hours, thereby obtaining a toluene solution of silicone-grafted acrylic copolymer. This solution was subjected to toluene removal at 100°C under reduced pressure, followed by cooling and crushing, thereby obtaining a powder of silicone-grafted acrylic copolymer (Sx Acrylic I) containing 50 mass% of siloxane.

### [SxPI: Silicone-modified polyimide resin]

Charged into a reaction flask vessel were 44.4g (0.1 mole) of 4,4'-hexafluoropropylidene bisphthalic acid dianhydride, and 400g of n-methyl-2-pyrrolidone. Next, dropped into the flask was a solution obtained by dissolving 90.9g (0.075 mole) of diaminosiloxane (X-22-9496 produced by Shin-Etsu Chemical Co., Ltd.) represented by the following formula (ii), and 10.3g (0.025 mole) of 2,2-bis[4-(4-aminophenoxy)phenyl]propane, into 100g of n-methyl-2-pyrrolidone, while adjusting the reaction system such that its temperature did not exceed 50°C. After completion of dropping, stirring was further conducted for 10 hours at a room temperature. Subsequently attached to the flask was a reflux condenser having a water receptor, followed by addition of 30g of xylene and by temperature elevation up to 150°C, such that this temperature was kept for 6 hours to obtain a solution which was then cooled down to a room temperature, followed by reprecipitation in methanol. The thus obtained precipitate was dried, to obtain a silicone-polyimide copolymer (SxPI) having a repeating unit represented by the following formula (iii).

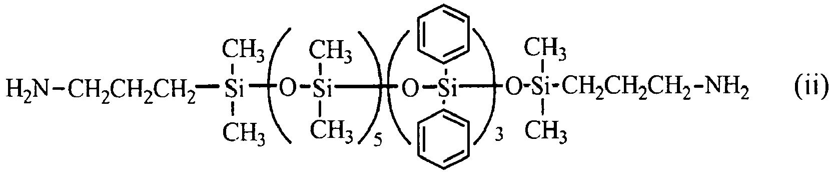

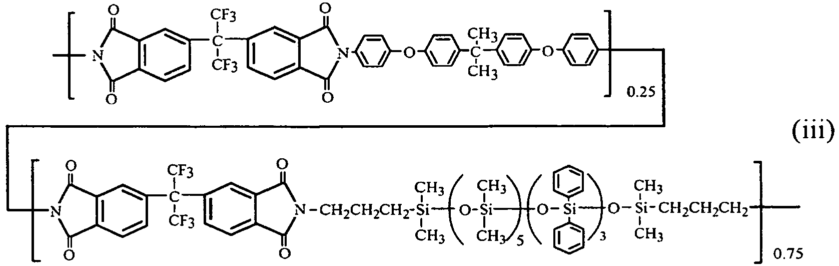

### [Sx Polyester: Silicone-modified polyester]

Charged into a reaction vessel were: 0.982kg (0.3 mole) of a siloxane having phenolic groups at its both ends (polymerization degree 40) obtained by hydrosilylation of eugenol with a siloxane having Si-H groups at its both ends; 0.0799kg (0.35 mole) of bisphenol A; 0.0381kg (0.07 mole) of tetrabromo bisphenol A; 7.65g (0.05 mole) of p-tert-butyl phenol; 68.4g (1.71 moles) of sodium hydroxide; 1.53g of benzyl-tri-n-butylammonium chloride, and 1.18g of hydrosulfite sodium, as polymerization catalysts; and 5.90L of water, thereby establishing a water phase in the reaction vessel. Further, in another reaction vessel, dissolved into 3.47L of dichloromethane was 152.6g (0.75 mole) of phthalic chlorides (molar ratio=50:50) as an equal amount mixture of isophthalic chloride and terephthalic chloride, thereby establishing an organic phase. This organic phase was added, with strong stirring, into the water phase solution having been kept stirred, in a manner to keep the temperature at 15°C to thereby conduct a polymerization reaction for 2 hours. Thereafter, the stirring was stopped, followed by separation of the water phase and organic phase from each other by decantation. Added into the organic phase, from which the water phase was separated, were 12L of pure water and 1mL of acetic acid to thereby stop the reaction, followed by further stirring at 15°C for 30 minutes. The resultant organic phase was washed five times by pure water, followed by reprecipitation of the organic phase in hexane. The thus precipitated polymer was separated from the organic phase, followed by drying over one day, thereby obtaining a polyarylate resin (A-1).

### [Sx Acrylic II: Silicone-modified acrylic resin]

Mixedly charged into an open vessel were: 1,500 mass parts of octamethylcyclotetrasiloxane, 3.8 mass parts of methacryloxypropylmethylsiloxane, and 1,500 mass parts of ion exchange water; and added into the mixture were 15 mass parts of sodium lauryl sulfate, and 10 mass parts of dodecylbenzenesulfonic acid. The resultant mixture was stirred and emulsified by a homomixer, and then twice passed through a homogenizer at a pressure of 3,000 bars, thereby preparing a stable emulsion. Next, the emulsion was charged into a flask, heated at 70°C for 12 hours, cooled down to 25°C, and maturated for 24 hours. Thereafter, the emulsion was adjusted to pH 7 by sodium carbonate, into which nitrogen gas was blown for 4 hours, and the emulsion was then subjected to steam distillation to distillingly remove a volatile siloxane, followed by addition of ion exchange water, thereby adjusting the nonvolatile fraction to be 45 mass%. 333 mass parts of the above obtained emulsion (including 150 mass parts of siloxane fraction) and 517 mass parts of ion exchange water were charged into a three-neck flask vessel of 2L having a stirrer, a condenser, a thermometer, and a nitrogen gas inlet, and the interior of the vessel was adjusted to 30°C under nitrogen gas flow. Thereafter, added thereinto were 1.0 mass part of t-butylhydroperoxide, 0.5 mass part of L-ascorbic acid, and 0.002 mass part of ferrous sulfate heptahydrate; and subsequently dropped thereinto was 350 mass parts of butylacrylate over 3 hours while keeping the temperature within the vessel at 30°C. After completion of dropping, stirring was further continued for one hour, thereby completing the reaction. The thus obtained copolymerization emulsion included a solid content concentration of 41.3 mass%. Then, 100 mass parts of the above emulsion was charged into a vessel having a stirrer, and heated to 80°C; into which was added a solution prepared by dissolving 92 mass parts of sodium sulfate into 563 mass parts of pure water, thereby depositing an acrylic-modified polyorganosiloxane; followed by filtration, water washing, and water removal in a repeated manner, and then followed by drying at 60°C, thereby obtaining an acrylic-modified organopolysiloxane (Sx Acrylic II) having a siloxane modification amount of 70 mass%.

### [Sx Epoxy resin: Silicone-modified epoxy resin]

Charged into a reaction vessel were 300ml of toluene, 187g of an allyl group-containing epoxy resin, 150g of both-end-hydrogen siloxane (polymerization degree of 100), and 2g of 1% toluene solution of platinum catalyst coordinated with divinyltetramethyl disiloxane, as a catalyst; followed by conduction of reaction at 100°C for 2 hours, and then by distillation removal of toluene under reduced pressure, thereby obtaining a silicone-modified epoxy resin liquid (Sx Epoxy resin) having a siloxane modification amount of 44.5 mass%.

### [Others]

In Tables 1 to 5, the following abbreviations at the left column are to denote substances at the right column, respectively:
Non-silicone PC: CALIBRE (Trademark) 200-30 produced by Sumitomo Dow Limited
TPU: Elastollan C95A produced by BASF Limited
Acrylic resin: ACRYPET MD produced by Mitsubishi Rayon Co., Ltd.
PI: AURUM-PL450C produced by Mitsui Chemicals, Inc.
PET: Teijin Tetoron Film G2 produced by Teijin DuPont Films Japan Limited
Vinyl chloride resin: Vinyblan 240 produced by Nisshin Chemical Industry Co., Ltd.
Acrylic plate: ACRYLITE EX produced by Mitsubishi Rayon Co., Ltd.

### [Examples 1-1 to 1-3, and Comparative Example 1: Difference of surface treatment manner]

Checked were joined degrees of Examples 1-1 to 1-3, where to-be-joined surfaces of first substrates were subjected to an ultraviolet light irradiating treatment, a corona treatment, and a plasma treatment, respectively, and Comparative Example 1, where no treatments were applied to a to-be-joined surface of a first substrate. The results thereof are also shown in Table 1.

**[Table 1]**

| | Example 1-1 | Example 1-2 | Example 1-3 | Comparative Example 1 |
|---|---|---|---|---|
| (1)Formed resin body | SxTPU | SxTPU | SxTPU | SxTPU |
| (2)Substrate | Glass | Glass | Glass | Glass |
| Treatment manner | 172nm irradiation | Corona treatment | Plasma treatment | Without treatment |
| Joined degree | Good | Good | Good | Poor |

### [Examples 2-1 to 2-8, and Comparative Example 2: Difference of first substrate]

First substrates and second substrates listed in Table 2 were made into planar composites, respectively, by a heating press machine, in an appropriately combined manner. It is noted that the composite of Comparative Example 2 was prepared by adopting a formed resin body and a substrate, both including no silicone-modified resins. These composites were used to check differences of joined degrees due to differences of first substrates, respectively. The results thereof are also shown in Table 2.

**[Table 2]**

| | Example 2-1 | Example 2-2 | Example 2-3 | Example 2-4 | Example 2-5 | Example 2-6 | Example 2-7 | Example 2-8 | Comparative Example 2 |
|---|---|---|---|---|---|---|---|---|---|
| (1) Formed resin body | SxPC | SxAcrylic I | SxPI | SxPolyester | SxPC | SxAcrylic I | SxPI | SxPolyester | PI |
| (2) Substrate | Glass | Glass | Glass | Glass | SxPC | SxAcryl ic I | SxPI | SxPolyester | PI |
| Treatment manner | 172nm irradiation | 172nm irradiation | 172nm irradiation | 172nm irradiation | 172nm irradiation | 172nm irradiation | 172nm irradiation | 172nm irradiation | 172nm irradiation |
| Joined degree | Good | Good | Good | Good | Good | Good | Good | Good | Poor |

### [Examples 3-1 to 3-6: Difference of blended materials of first substrate]

As listed in Table 3, two types of materials were blended with each other at a mass ratio of 1/1 as each first substrate, and melted and kneaded by Labo Plastomill manufactured by TOYO SEIKI Co., Ltd., followed by preparation together with an associated second substrate into a planar composite by a heating press machine. These composites were used to check differences of joined degrees due to differences of two types of blended materials of each first substrate, respectively. The results thereof are also shown in Table 3.

**[Table 3]**

| | Example 3-1 | Example 3-2 | Example 3-3 | Example 3-4 | Example 3-5 | Example 3-6 |
|---|---|---|---|---|---|---|
| (1) Formed resin body | SxTPU | SxPC | SxAcrylic I | SxPI | SxPolyester | SxAcrylic II |
| | TPU | PC | Acrylic resin | PI | PET | Vinyl chloride resin |
| (2) Substrate | Glass | Glass | Glass | Glass | Glass | Glass |
| Treatment manner | 172nm irradiation | 172nm irradiation | 172nm irradiation | 172nm irradiation | 172nm irradiation | 172nm irradiation |
| Joined degree | Good | Good | Good | Good | Good | Good |

### [Examples 4-1 to 4-7: Difference of second substrate]

As listed in Table 4, two types of materials were blended with each other at a mass ratio of 1/1 as each first substrate, and melted and kneaded by Labo Plastomill manufactured by TOYO SEIKI Co., Ltd., followed by preparation together with an associated second substrate into a planar composite by a heating press machine. These composites were used to check differences of joined degrees due to differences of second substrates, respectively. The results thereof are also shown in Table 4.

**[Table 4]**

| | Example 4-1 | Example 4-2 | Example 4-3 | Example 4-4 | Example 4-5 | Example 4-6 | Example 4-7 |
|---|---|---|---|---|---|---|---|
| (1) Formed resin body | SxTPU | SxPC | SxAcryl-ic I | SxPI | SxPolyester | SxAcryl-ic II | SxEpoxy resin |
| | TPU | PC | Acrylic resin | PI | PET | Vinyl chloride resin | - |
| 2) Substrate | Aluminum plate | Acrylic plate | Acrylic plate | Copper plate | Iron plate | Aluminum plate | Copper plate |
| Treatment manner | 172nm irradiation | 172nm irradiation | 172nm irradiation | 172nm irradiation | 172nm irradiation | 172nm irradiation | 172nm irradiation |
| Joined degree | Good | Good | Good | Good | Good | Good | Good |

### [Examples 5-1 to 5-4, and Comparative Example 5: Difference of time from joining surface treating step to joining step]

As listed in Table 5, two types of materials were blended with each other at a mass ratio of 1/1 as each first substrate, and melted and kneaded by Labo Plastomill manufactured by TOYO SEIKI Co., Ltd., followed by preparation together with an associated second substrate into a planar composite by a heating press machine. These composites were used to check differences of joined degrees due to differences of times from a joining surface treating step to a joining step, respectively. The results thereof are also shown in Table 5.

**[Table 5]**

| | Example 5-1 | Example 5-2 | Example 5-3 | Example 5-4 | Comparative Example 5 |
|---|---|---|---|---|---|
| (1) Formed resin body | SxTPU | SxTPU | SxTPU | SxTPU | SxTPU |
| | TPU | TPU | TPU | TPU | TPU |
| (2) Substrate | Aluminum plate | Aluminum plate | Aluminum plate | Aluminum plate | Aluminum plate |
| Treatment manner | 172nm irradiation | 172nm irradiation | 172nm irradiation | 172nm irradiation | Without treatment |
| Left time until joining step after treatment | 5 minutes | 60 minutes | 24 hours | 1 week | 5 minutes |
| Joined degree | Good | Good | Good | Fair | Poor |

As seen from the above, in the composite of the present invention, the substrate comprising a formed resin body containing a silicone-modified resin and the other substrate are joined to each other in a strong manner with excellent durability therebetween.

It is noted that the present invention is not limited to the above embodiments. The embodiments are illustrative, and whatever have substantially the same configuration as the technical concept recited in the claims of the present application and exhibit the same functions and effects, are embraced within the technical scope of the present invention.

## Claims

1. A composite comprising a first substrate comprising a formed resin body containing a silicone-modified resin, and a second substrate having a to-be-joined surface joined to a to-be-joined surface of the first substrate,
wherein the to-be-joined surface of the first substrate, or the to-be-joined surfaces of the first and second substrates has/have been subjected to application of one or more of an ultraviolet light irradiating treatment, a corona treatment, and a plasma treatment.

2. The composite according to claim 1, wherein the silicone-modified resin contained in the first substrate is provided by silicone-modifying one or more kinds of an epoxy resin, a polyethylene resin, a polypropylene resin, a polystyrene resin, an acrylic resin, a polycarbonate resin, a thermoplastic urethane resin, a PBT resin, a PET resin, a polyimide resin, and a polyamide imide resin.

3. The composite according to claim 1 or 2, wherein the second substrate is a formed resin body, a cured paint resin body, a glass, or a metal, and
wherein the formed resin body or cured paint resin body as the second substrate comprises one or more kinds of a polyethylene resin, a polypropylene resin, a polystyrene resin, an acrylic resin, a polycarbonate resin, a thermoplastic urethane resin, a PBT resin, a PET resin, a polyimide resin, a polyamide imide resin, and a silicone-modified resin obtained by silicone-modifying one of these resins.

4. The composite according to any one of claims 1 to 3, wherein the silicone-modified resin comprises a resin structure to be modified, and a silicone structure represented by the following average composition formula (i) and bonded to the resin structure in a blocked form or grafted form,
R¹ₐR²_{b}SiO_{4-a-b/4} (i)
wherein
R¹ represents a hydrogen atom, or a monovalent hydrocarbon group,
R² represents one of a single bond and a divalent hydrocarbon linking group each to be bonded to the resin structure, which divalent hydrocarbon linking group may include a nitrogen atom, oxygen atom, or sulfur atom, and
"a" and "b" represent such numbers, respectively, satisfying that 0<a≤3, 0<b≤1, and 0<a+b<4.

5. The composite according to any one of claims 1 to 4, wherein the first substrate contains a silicone modification amount of 0.001 to 10 mass%.

6. The composite according to any one of claims 1 to 5, wherein the applicable to-be-joined surface is subjected to application thereto of an ultraviolet light irradiating treatment.

7. The composite according to claim 6, wherein the ultraviolet light irradiating treatment to be applied to the to-be-joined surface is conducted by irradiation of ultraviolet light at a wavelength of 172nm or 126nm.

8. The composite according to any one of claims 1 to 7, wherein the composite is used as a display medium, as an alternative material to a vehicular glass, or as an alternative material to a constructional glass.

9. A method of joining a to-be-joined surface of a first substrate comprising a formed resin body containing a silicone-modified resin to a to-be-joined surface of a second substrate to thereby produce a composite, comprising:
a joining surface treating step for applying one or more of an ultraviolet light irradiating treatment, a corona treatment, and a plasma treatment, to the to-be-joined surface of the first substrate, or to the to-be-joined surfaces of the first and second substrates; and
a joining step for subsequently joining the first substrate to the second substrate.
